## Europäisches Patentamt

(19) **European Patent Office**

**Office européen des brevets**

(11) Publication number: **0 005 353**
**B1**

(12) # EUROPEAN PATENT SPECIFICATION

(45) Date of publication of patent specification: **17.06.81**

(51) Int. Cl.³: **B 60 P 3/20**

(21) Application number: **79300725.3**

(22) Date of filing: **27.04.79**

(54) **Method and apparatus for transporting aquatic food materials under refrigerated conditions.**

(30) Priority: **28.04.78 GB 1702878**
**28.04.78 GB 1702978**
**25.07.78 GB 3106878**
**25.07.78 GB 3108078**

(43) Date of publication of application:
**14.11.79 Bulletin 79/23**

(45) Publication of the grant of the European patent:
**17.06.81 Bulletin 81/24**

(84) Designated Contracting States:
**BE CH DE FR GB IT LU NL SE**

(56) References cited:
**AU - B - 414 754**
**DE - A - 2 353 098**
**DE - B - 1 182 967**
**DE - B - 1 630 117**
**FR - A - 1 541 325**
**US - A - 2 575 939**

(73) Proprietor: **E M WILCOX LIMITED**
**Royce Road Carr Road Industrial Estate**
**Peterborough (GB)**

(72) Inventor: **Prigmore, Edward William**
**Birch Farm, Raunds**
**Northants (GB)**
Inventor: **Lovie, James**
**101 Cairntrodlie**
**Peterhead Scotland (GB)**
Inventor: **Hill, Derek**
**3 Lancing Close**
**Werrington Peterborough (GB)**

(74) Representative: **Main, Peter Stephen**
**HYDE, HEIDE & O'DONNELL 2 Serjeants' Inn**
**London EC4Y 1LL (GB)**

Courier Press, Leamington Spa, England.

## Method and apparatus for transporting aquatic food materials under refrigerated conditions

The conventional method of transporting fish from fishing ports to inland fish markets involves temporary storage of the catch in tanks at the fishing port and their eventual packaging with ice in boxes which are then loaded into vehicles for overland transportation. These procedures impose appreciable delays between the unloading of the fish from the fishing vessels and the arrival of the fish on the food market, and involve large handling costs which are necessarily reflected in the market price of the fish. Apart from the labour involved in boxing up, the actual loading of the boxes onto transport vehicles is very expensive. For example, it often takes about 6 hours to load 18 tons of filled boxes onto a transport vehicle. An appreciable fraction of the transportation cost is attributable to the boxes. An 18 ton load includes about 4 tons of boxes.

A further serious disadvantage of the conventional procedures is that a substantial proportion of the tonnage of fish brought into port cannot be kept in prime condition for the period of time necessary for it to reach the inland fish markets where it would otherwise command a very good price. The period of time for which much sea food will remain in good condition while boxed in ice is strictly limited. Pelagic fish for example are very prone to rancidity when boxed for one or two days, even when kept in modern refrigerated transporters· operating between sea ports and inland markets. In consequence certain inland areas cannot obtain sea foods in top quality condition through the normal channels of distribution and supply and such foods are then available only at very inflated prices. The fish boxes themselves tend to harbour unhygienic conditions and this is often a contributory factor in the deterioration of the food prior to marketing.

The present invention aims to provide a method of transportation by which aquatic farm material, particularly fish, can be made available to food markets with less risk of deterioration and/or with appreciably lower handling costs.

According to the invention, fish or other aquatic farm material for the food market is transported in a heat-insulated bulk load container together with liquid thereby to keep the farm material in wet condition and during the transportation a refrigeration system is operated to keep the wet farm material in refrigerated condition.

Methods according to the invention are defined in claims 1 and 2 hereof.

In the nature of the invention, its potential benefits are best realised when using a large container having a load-carrying capacity say in excess of 15 tons.

The invention involves a quite radical departure from conventional practice in the handling of fish and other sea food between fishing ports or harbours and inland delivery sites. Tests have surprisingly shown that a load of fish of many tons in weight can be kept in good condition for some days in a bulk load container of a form suitable for overland transportation, when loaded together with a relatively small amount of water and transported in cooled condition in accordance with the invention as above defined. The liquid present in the container can relieve the food material from crushing when carrying large loads.

The length of time for which most fish can be kept in good condition under the conditions of this transportation method, in which the fish is kept refrigerated and wet, appreciably exceeds that which is possible in the conventional method of transporting the fish in dry-packed condition as hereinbefore described. The available load-carrying space in the container is utilised much more efficiently than it would be if the food were transported in boxes. In addition labour costs for loading and unloading are greatly reduced.

The nature of the liquid is open to choice within the limits imposed by the requirement that it remains in liquid condition at the temperature and pressures prevailing in the container during transportation. For transporting sea food the liquid can be and is preferably sea water.

In preferred embodiments of the invention it is applied for transporting sea food which is loaded into the container direct from a fishing vessel. Preferably the food is pumped in bulk from a hold or other storage space in the vessel into the container.

The refrigerated container can be transported according to the invention, either by road or rail.

For deriving the greatest benefit from the invention, the bulk load container should be capable of being easily loaded and unloaded and should be itself conveniently transportable.

In the most preferred embodiments of the invention, the bulk load container forms the tipping body of a road or rail vehicle, such body having at least one sealable filling hatch and an end closure wall which provides a liquid-tight seal and can be opened to allow the container to be emptied by tipping the body. The end closure wall is preferably hinged at the top. The vehicle is preferably a road vehicle. It can be self-motorised or designed for coupling to a haulage vehicle.

In an alternative embodiment of the method according to the invention the bulk load-carrying container does not form part of a transportation vehicle but is itself loaded onto such a vehicle before or after being itself loaded with the aquatic food material and water. In such a method, the cold generator or cold source of the refrigeration system may be associated with the container so as to form a unit therewith, e.g. for handling by means of a crane and/or conveyor or other handling gear. The use of a bulk load container which forms the tipping body of a vehicle is however much more advantageous in respect of convenience and load-handling costs.

Cooling of the contents of the load container is preferably achieved by a coolant which is caused to flow through passageways in heat-conductive relationship with the interior of the container. Cooling of large bulk loads can be easily and economically effected in that way. Preferably the container has double-skinned walls incorporating coolant passages and heat-insulating material, the coolant passages being in contact with or in part defined by the inner skin. The refrigeration system may comprise a refrigeration plant of the compression and expansion type or a system employing a reservoir of liquefied gas, e.g. liquefied nitrogen, from which coolant is released and caused to flow in vaporised condition through such passageways.

In certain embodiments of the invention the contents of the load container are cooled at least in part by introduction of vaporised coolant into the container, above the surface of the bulk load. For example cooling may be achieved by flow of coolant through passageways in the container walls and by the continuous or intermittent release of an amount of the coolant into the interior of the container above the load surface. The introduction of coolant into the interior of the container can be beneficial in order to establish an inert atmosphere which further conduces to preservation of the load in good condition.

The invention includes a vehicle having a refrigerated tipping body and suitable for carrying out a method according to the invention as hereinbefore referred to.

A vehicle according to the invention has a heat-insulated bulk-load-carrying body in the form of a container which has an associated refrigeration system and is characterised in that the body is tippable and provides a liquid-tight storage space, the body having at least one sealable filling hatch and an end closure wall which provides a liquid-tight seal and can be opened to allow the container to be emptied by tipping the body. The vehicle is preferably a road vehicle. The vehicle may be motorised or adapted for haulage by a motorised vehicle.

In preferred embodiments of a vehicle according to the invention, refrigerant passageways are formed in or carried by a wall or walls of the load-carrying body and a refrigerant source or generator is supported by the vehicle independently of the tipping body and connected with such passageways so that the connections do not have to be broken when the body is tipped.

Such connections can for example comprise flexible conduits which extend to and from the tipping body at a region adjacent its tipping axis, e.g. between that axis and the rear of the body. In such a vehicle, the refrigeration system may operate with a vaporous refrigerant, e.g. a Freon or carbon dioxide, on a standard refrigeration cycle. At least the principal functional components of the refrigeration plant, and particularly the compressor and condenser, can be supported for example on a chassis or frame beneath the tipping body of the vehicle. Alternatively the refrigeration system may be one utilising a reservoir or reservoirs of liquefied gas refrigerant. If a refrigeration system of the latter type is employed, the refrigerant holder(s) can be carried by the tipping body itself instead of being supported independently of such body.

Reference is now made to the accompanying diagrammatic drawings showing an example of a bulk load-carrying vehicle according to the invention and suitable for use in carrying out a method according to the invention. In these drawings:

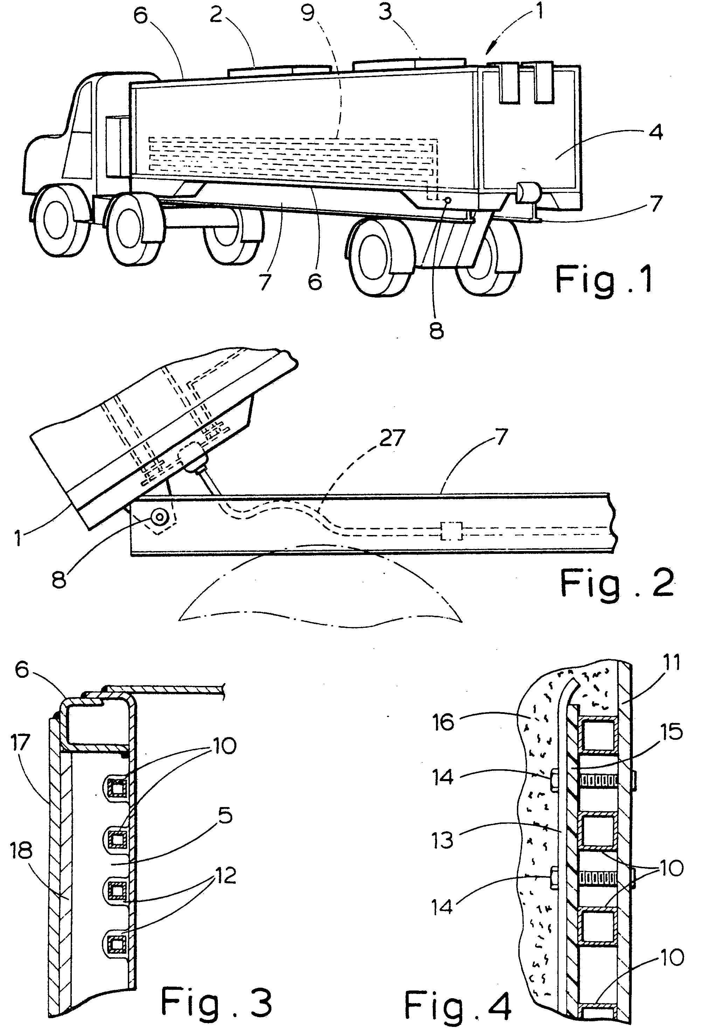

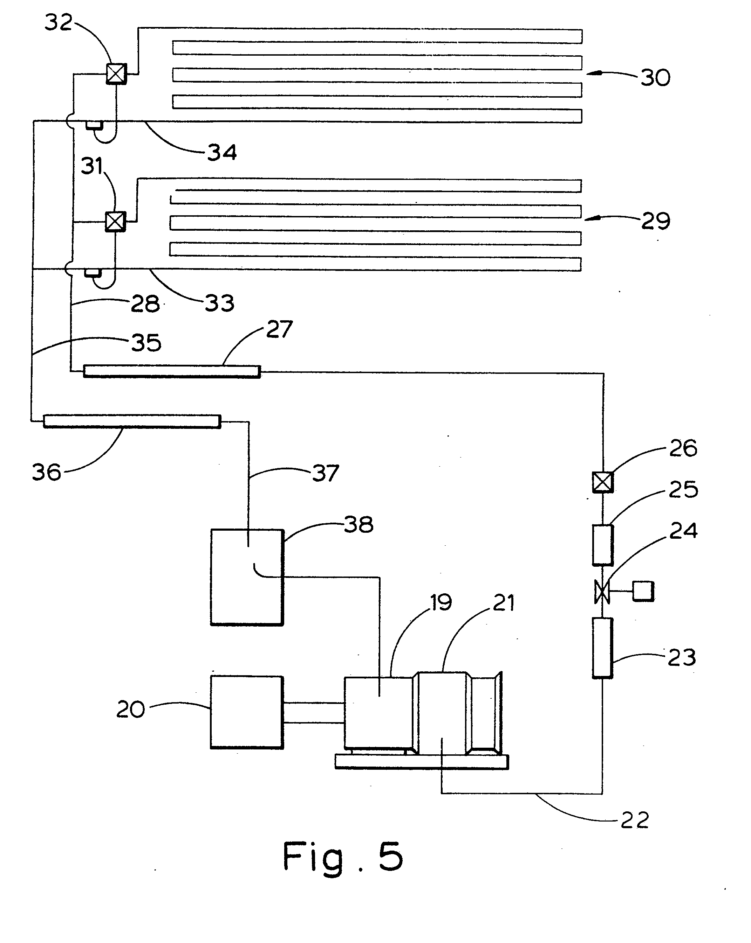

Fig. 1 is a general view of a vehicle according to the invention; Fig. 2 shows a detail of the vehicle body mounting; Figs. 3 and 4 are sectional views of details of the construction of the side walls of the vehicle body, and Fig. 5 represents the refrigeration system.

The vehicle comprises a tipping load-carrying body 1 constructed for carrying a bulk load. The body provides a single internally unobstructed load-carrying space of large capacity, for example of the order or 28.3 cubic meters. The body has two filling hatches 2 and 3 with hermetic sealing covers, and a top-hinged tail-gate 4.

The body is constructed almost entirely from sheet aluminium alloy of a specification within BSS: 1470. Each of the top, bottom, side and end walls (one of the latter being constituted by the tail gate) is double-skinned and rigidity is imparted to the structure by a system of ribs such as 5 extending around the body in transverse planes, and ribs such as 6 extending along the horizontal corner edges of the body. The various ribs are hollow and formed by strips of aluminium, bent to channel section and welded to the inner skin.

The load-carrying body is welded to a tipping floor comprising cross-bearers to which bottom transverse ribs of the body are welded. The body is supported by a vehicle frame or chassis 7 to which the body is connected by rear hinges 8.

Within the sub-frame or chassis 7 of the vehicle there is mounted the refrigeration plant comprising a compressor, condenser and surge vessel. As will be further described with reference to Fig. 4, flexible conduits such as 27 (Fig. 2) connect this plant with five cooling coils one of these being disposed within the bottom wall of the load-carrying body and four of them being disposed in its side walls (two in each). The flexible conduits extend between the chassis and the tipping body at a region located adjacent to the tipping hinges 8 of the body. The conduits impose no restraint on the movement of the body when it is tipped about the hinge axis by the body tipping mechanism (not shown) for discharging a load from the body through the tail gate.

The two cooling coils in each side wall are disposed one above the other. Fig. 1 shows by dotted lines the path of one of the cooling coils (the lower one) in the nearer side wall of the vehicle body. The coil, designated 9, in fact comprises eight parallel straight reaches extending along the body side.

Fig. 3 is a vertical cross-section of part of the near side wall of the vehicle body at a position where lengths of tubing 10 making up one of the cooling coils enter one of the vertical ribs 5. The tubing is formed of HE30 WP TB aluminium alloy (BSS: 1470). The tubing is of square or rectangular cross-section providing a flat face which is located in contact with the inner skin 11 of the side wall. The vertical rib is formed with cut-outs 12 to leave clearance for the passage of the tubing. At various local positions along the length of each side wall of the vehicle body the tubing forming the cooling coils is clamped to the inner skin 11 by a clamping strip 13 as indicated in Fig. 4. The clamping strips are fastened to the inner skin by screw-threaded fasteners 14, e.g., fasteners comprising threaded pins secured to the inner skin and cooperating nuts which can be tightened onto the pins to exert the required clamping pressure on the strips.

Thermally insulating material 16 is disposed between the inner skin 11 and the outer skin 17 of the load-carrying body, including the hatch covers and the tailgate. Preferably the thermally insulating material is polyurethane foam. Such material may be applied in prefabricated sheets, slabs or other pieces or injected between spaced skins of the body or container and polymerised and foamed in situ. An example of alternative thermally insulating materials is polystyrene but polyurethane has much better thermally insulating properties. Quantities of such material 16 are also disposed within the hollow ribs 5. In the illustrated embodiment a layer 18 of wood is disposed between the outer skin 17 and the more highly insulating filling material 16 in the areas between the ribs of the vehicle body.

Fig. 5 is a flow diagram of the refrigeration system. The diagram shows only two cooling coils connected to the refrigeration plant. Any number of additional coils can be connected to the plant in the same manner.

The refrigeration plant comprises a compressor 19 which is electrically driven by a diesel-operated generator 20, and an air-cooled condensing unit 21. The refrigerant delivery line 22 from the condensing unit leads via a dehydrator 23, a solenoid valve 24, a sight glass 25 and a stop valve 26 to a flexible connection 27 by which the said delivery line is coupled to the inlet manifold 28 of the cooling coils 29, 30. The flexible connection 27 is formed by one of the flexible conduits which extend between the vehicle chassis and the tipping body of the vehicle, in the vicinity of its tipping axis, as hereinbefore referred to. Between the inlet manifold 28 and the cooling coils there are thermostatically controlled expansion valves 31, 32 which operate automatically in dependence on the occurrence of predetermined temperature fluctuations in the refrigerant outlet lines 33, 34 from the coils. These outlet lines are connected to a common return line 35 which is coupled via another flexible connection 36 with the suction side of the refrigeration plant. The flexible connection 36 is connected to the compressor 19 via a suction line 37 in which there is incorporated a liquid trap 38.

When the hatch covers and tail-gate are closed the body is an hermetically sealed container. It can be used to carry liquid or solid material in wet state, in refrigerated condition. The vehicle is very suitable for loading with fish and sufficient water to maintain the fish in wet condition during transportation.

It is recommended to make the tail gate with a plug portion which fits into the end of the space defined by the top, bottom and side walls of the body. The tail gate should of course also have a face seal which seals against seating faces at the adjacent end of the vehicle body when the tail gate is closed. Effective sealing can be promoted by providing the tail gate with sliding hinges which permit bodily movement of the tail gate against the seating faces under clamping pressure exerted by screw clamping means (not shown).

In addition to or in lieu of one or more passageways for refrigerant enclosed within a boundary wall or walls of the container, there may be one or more hollow coolers of plate or other form connected into the refrigerant circuit(s) and projecting into the load-carrying space so as to be exposed to contact by the load.

In a modified form of the illustrated refrigerated vehicle, the refrigeration plant carried by the sub-frame or chassis 7 is replaced by a pressurised liquefied gas holder or holders from which coolant can be released to flow through the cooling coils, and instead of recycling coolant, the coils vent coolant to atmosphere. Alternatively or in addition, there may be a connection between one or more of the coils and the interior of the vehicle body at a top region thereof to permit release of cold gas into a space above the load. Such release of coolant into the interior of the vehicle body can be under remote or automatic control. A suitable vaporizer may be interposed between the liquefied gas holder(s) and the said coils. Such vaporizer can itself be in heat-conductive relationship with the interior of the vehicle body. The liquefied gas need not be continuously released from the liquefied gas holder(s) during transportation of the load. Such release can be effected over any required period or periods of time depending on cooling demands.

The illustrated vehicle, while particularly intended for use in the bulk carrying of fish in wet condition, can be used for other purposes, e.g. for carrying other foodstuffs, e.g. peas in water or animal foodstuff such as offal, in wet or dry condition; for carrying potable liquids, or for carrying substances in other categories which may benefit from storage at below ambient temperatures.

The following is an example of a method according to the invention:

### Example

A vehicle as described with reference to the accompanying drawings and having a load-carrying capacity of 18 tons is driven to a fishing port where 15 tons of freshly caught herrings are pumped from a trawler directly into the load-carrying body of the vehicle. Additionally 3 tons of liquid, e.g. ordinary water or sea water, are pumped into the vehicle body.

After sealing the covers on the hatches 2 and 3 the vehicle is driven from the port to an inland destination while operating the refrigeration plant to keep the load at a temperature a little above the freezing point of the liquid. The plant incorporates a compressor, an air cooled condenser, expansion valves and a surge vessel disposed between the return lines from the cooling coils and the compressor. The refrigeration system can utilise any suitable vaporous refrigerant, e.g. Freon 12. On arrival at the destination the load is discharged by opening the vehicle tail-gate and tipping the vehicle body. During tipping, any liquid refrigerant which drains from the cooling coils enters the surge vessel and does not pass directly back to the compressor.

Instead of introducing sea water as the liquid, ordinary water can be used provided the refrigeration temperature in the vehicle body is above 0°C. When using ordinary water it can be pumped into the vehicle body prior to its arrival at the sea port, and cooled on route.

The full load of herrings transported as described in the foregoing example was found to be in excellent condition after storage in the vehicle for several days. The same method was used for transporting in one test mackerel, in a second pilchards in a third sprats. The method was found to be equally satisfactory for those purposes.

The amount of water introduced into the load container should of course preferably not exceed or not substantially exceed what is required for keeping the fish or other food material wet and preventing crushing of material under the superincumbent weight, in order to utilise the carrying capacity of the container as profitably as possible. The minimum weight of water which should be used per unit weight of food material depends in part on the nature of the food material. Fish with a high oil content seem to require more water than other. Generally speaking it is appropriate to use from 10 to 25% by weight of water based on the weight of the fish, depending inter-alia on the time for which the fish are to remain in the container. The temperature of the liquid during the storage and transportation period may be just a few degrees above the freezing temperature of the liquid, e.g. between 0° and 3°C when using ordinary water and between —4° and 3°C when using sea water.

## Claims

1. A method of transporting fish or other aquatic farm material for the food market, which method comprises providing a heat-insulating transportable bulk load container which is adapted to hold a bulk load comprising both solid and liquid material and which has an associated refrigeration system; loading that container with the farm material in bulk and with sufficient liquid to keep the farm material in wet condition; and transporting the said container while keeping the farm material therein in refrigerated wet condition by means of such refrigeration system.

2. A method of transporting a load of fish or other aquatic farm material for the food market, characterised in that a heat-insulated liquid-tight bulk load container is loaded with the aquatic farm material and with a body of water sufficient to keep the farm material in wet condition, and in that said container is transported while operating a refrigeration system to keep the container contents in a refrigerated condition but above the freezing temperature of the liquid.

3. A method according to claim 1 or 2, wherein the aquatic farm material is sea food which is loaded into the container direct from a fishing vessel.

4. A method according to any preceding claim, wherein the bulk load container forms the tipping body of a road or rail vehicle, such body having at least one sealable filling hatch and an end closure wall which makes a liquid-tight seal and can be opened to allow the container to be emptied by tipping the body.

5. A method according to any preceding claim, wherein cooling of the contents of the load container is achieved by a coolant which is caused to flow through passageways in heat conductive relationship with the interior of the container.

6. A method according to any preceding claim, wherein the contents of the container are cooled at least in part by introduction of vaporized coolant into the container, above the surface of the bulk load.

7. A refrigerated load-carrying vehicle having a heat-insulating bulk load-carrying body in the form of a container which has an associated refrigeration system characterised in that the body is tippable and provides a liquid-tight storage space, the body having at least one sealable filling hatch and an end closure wall which makes a liquid tight seal and can be opened to allow the container to be emptied by tipping the body.

8. A vehicle according to claim 7, wherein refrigerant passageways are formed in or carried by a wall or walls of the load-carrying body and a refrigerant source or generator is supported by the vehicle independently of the tipping body and connected with such passageways so that the connections do not have to be broken when the body is tipped.

9. A vehicle according to claim 8, wherein such connections comprise flexible conduits which extend to and from the tipping body at a region adjacent its tipping axis.

## Patentansprüche

1. Verfahren zum Befördern non Fisch oder anderen Wasserwirtschaftsprodukten für den Lebensmittelmarkt, dadurch gekennzeichnet, daß ein wärmeisolierter transportierbarer Schüttgutbehälter vorgesehen ist, der so angepaßt ist, daß er aus festem oder flüssigem Material bestehendes Schüttgut faßt, und dem ein Kühlsystem zugeordnet ist; daß jener Behälter mit dem losen Wasserwirtschaftsmaterial und mit ausreichender Flüssigkeit gefüllt wird, um das Wasserwirtschaftsmaterial in feuchtem Zustand zu halten; und daß der besagte Behälter, während er das darin enthaltene Wasserwirtschaftsmaterial mit Hilfe des besagten Kühlsystems in gekühltem, feuchten Zustand hält, befördert wird.

2. Verfahren zum Befördern von Fisch oder anderen Wasserwirtschaftsprodukten für den Lebensmittelmarkt, dadurch gekennzeichnet, daß ein wärmeisolierter flüssigkeitsdichter' Schüttgutbehälter mit den Wasserwirtschaftsprodukten sowie mit einem Körper von Wasser beladen wird, welcher ausreicht um das Wasserwirtschaftsmaterial in feuchtem Zustand zu halten, und daß während der Behälter befördert wird das darin enthaltene Witschaftsmaterial mit Hilfe eines Kühlsystems in gekühltem Zustand gehalten wird, jedoch über dem Gefrierpunkt der Flüssigkeit.

3. Verfahren nach den Ansprüchen 1 oder 2, dadurch gekennzeichnet, daß das Wasserwirtschaftsmaterial aus Meeresprodukten besteht, die direkt vom Fischereifahrzeug in den Behälter geladen werden.

4. Verfahren nach den vorgegangenen Ansprüchen, dadurch gekennzeichnet, daß der Schüttgutbehälter den Kippkörper eines Straßen- oder Eisenbahnfahrzeuges bildet, wobei der besagte Körper wenigstens eine abdichtbare Ladeluke und eine Endverschlußwand besitzt, die einen flüssigkeitsdichten Verschluß bildet und geöffnet werden kann, um den Behälter durch Kippen des Körpers zu entleeren.

5. Verfahren nach den vorangegangenen Ansprüchen, dadurch gekennzeichnet, daß das Kühlen des Inhalts des Behälters erreicht wird, indem ein Kühlmittel veranlaßt wird, durch Durchgänge zu fließen, die mit dem Innern des Behälters in einem wärmeleitenden Verhältnis stehen.

6. Verfahren nach den vorangegangenen Ansprüchen, dadurch gekennzeichnet, daß der Inhalt des Behälters wenigstens teilweise dadurch gekühlt wird, daß ein dampfförmiges Kühlmittel über der Oberfläche des Schüttgutes in den Behälter eingeführt wird.

7. Gekühltes Fahrzeug zum Befördern einer Ladung mit einem wärmeisolierten Körper zum Befördern von Schüttgut in Form eines Behälters, dem ein Kühlsystem zugeordnet ist, dadurch gekennzeichnet, daß der Körper kippbar ist und einen flüssigkeitsdichten Speicherraum bildet, wobei der besagte Körper wenigstens eine abdichtbare Ladeluke und eine Endverschlußwand besitzt, die einem flüssigkeitsdichten Verschluß bildet und geöffnet werden kann, um den Behälter durch Kippen des Körpers zu entleeren.

8. Fahrzeug nach Anspruch 7, dadurch gekennzeichnet, daß Kältemitteldurchgänge in einer Wand oder in Wänden des eine Ladung befördernden Körpers vorhanden sind oder von ihr bzw. von ihnen getragen werden, und daß eine Kältemittelquelle oder ein Kältemittelzeuger von dem Fahrzeug unabhängig von dem Kippkörper getragen wird und mit den besagten Durchgängen verbunden ist, so daß die Verbindungen nicht unterbrocken werden, wenn der Kippkörper gekippt wird.

9. Fahrzeug nach Anspruch 8, dadurch gekennzeichnet, daß die besagten Verbindungen aus flexiblen Leitungen bestehen, die sich zum und vom Kippkörper in einem neben seiner Kippachse liegenden Bereich erstrecken.

## Revendications

1. Procédé de transport de poissons ou d'autres produits d'élevage aquatiques pour le commerce alimentaire, caractérisé en ce qu'il comprend les étapes qui consistent à utiliser un conteneur de chargement en vrac transportable et isolé thermiquement conçu pour contenir une charge en vrac comprenant à la fois des matières solides et liquides et auquel est associé un système de réfrigération; charger ce conteneur renfermant le produit d'élevage en vrac, ainsi qu'une quantité de liquide suffisante pour maintenir ce produit à l'état humide; puis transporter ce conteneur, tout en maintenant le produit d'élevage qu'il renferme, dans un état humide et réfrigéré au moyen du système de réfrigération.

2. Procédé de transport de poissons ou d'autres produits d'élevage aquatiques pour le commerce alimentaire, caractérisé en ce qu'on charge un conteneur en vrac isolé thermiquement et étanche aux liquides avec le produit d'élevage aquatique ainsi qu'avec un corps d'eau suffisant pour maintenir le produit d'élevage à l'état humide, et en ce que pendant le transport dudit conteneur, on fait fonctionner un système de réfrigération pour maintenir le contenu du conteneur dans un état humide mais au-dessus de la température de congélation dudit liquide.

3. Procédé suivant l'une quelconque des revendications 1 et 2, caractérisé en ce que le produit; d'élevage aquatique est un produit alimentaire marin que est chargé dans le conteneur directement d'un bateau de pêche.

4. Procédé suivant l'une quelconque des revendications précédentes, caractérisé en ce que le conteneur de chargement en vrac constitue la benne basculante d'un véhicule routier ou de chemin de fer, cette benne comportant au moins une trappe de remplissage pouvant être fermée hermétiquement, ainsi qu'une paroi de fermature en bout formant un joint étanche aux liquides et pouvant être ouverte pour vider le conteneur par basculement de la benne.

5. Procédé suivant l'une quelconque des revendications précédentes, caractérisé en ce que le refroidissement du contenu du conteneur de chargement est assuré en faissant passer un agent réfrigérant dans des passages maintenus en relation de conduction de chaleur avec l'intérieur de conteneur.

6. Procédé suivant l'une quelconque des revendications précédentes, caractérisé en ce que le contenue du conteneur est refroidi au moins partiellement par l'introduction d'un agent réfrigérant vaporisé dans le conteneur, au-dessus de la surface de la charge en vrac.

7. Véhicule de transport de charge réfrigéré comprenent une benne de transport de charge en vrac isolée thermiquement sous forme d'un conteneur auquel est associé un système de réfrigération, caractérisé en ce que ladite benne est basculante et définit un espace d'entreposage étanche aux liquides, la benne comportant au moins une trappe de remplissage pouvant être fermée hermétiquement, ainsi qu'une paroi de fermeture en bout formant un joint étanche aux liquides et pouvant être ouverte pour vider le conteneur par basculement de la benne.

8. Véhicule suivant la revendication 7, caractérisé en ce que les passages pour l'écoulement de l'agent réfrigérant sont formés dans ou définis par une ou plusieurs parois de la benne de transport de charge, tandis qu'une source ou un générateur d'agent réfrigérant est supporté par le véhicule indépendamment de la benne basculante en étant relié à ces passage, de telle sorte qu'il n'y ait aucune rupture des raccords lors du basculement de la benne.

9. Véhicule suivant la revendication 8, caractérisé en ce que les raccords précités sont constitués de conduits flexibles allant à et partant de la benne basculante dans une zone proche de l'axe de basculement.

Fig.1

Fig.2

Fig.3

Fig.4

Fig . 5